# EUROPEAN PATENT APPLICATION

(11) **EP 4 336 459 A1**
(43) Date of publication of application: **13.03.2024**
(21) Application number: 22810873.4
(22) Date of filing: 21.02.2022
(51) Int. Cl.: G06T 19/00, G06T 7/593

(54) **INFORMATION PROCESSING DEVICE, INFORMATION PROCESSING METHOD, AND PROGRAM**

(30) Priority: 27.05.2021 JP 2021089444
(71) Applicant: Sony Group Corporation, Tokyo 108-0075 (JP)
(72) Inventor: KIKUKAWA, Tetsuya, Tokyo 108-0075 (JP)
(74) Representative: D Young & Co LLP
(86) International application number: PCT/JP2022/006851
(87) International publication number: WO 2022/249592

(57) **Abstract**

A video processing apparatus (information processing apparatus) includes a 3D model generation unit (generation unit) and a 3D pose estimation unit (estimation unit). The 3D model generation unit generates a 3D model of a subject from multi-view images obtained by imaging the subject from a plurality of viewpoints. The 3D pose estimation unit estimates a 2D skeleton of the subject from each of the multi-view images, and estimates a 3D skeleton of the subject based on the estimation result of the 2D skeleton.

## Description

### Field

The present disclosure relates to an information processing apparatus, an information processing method, and a program.

### Background

There have been conventionally proposed methods of generating a 3D object in viewing space by using information obtained by sensing real 3D space, for example, multi-view images obtained by imaging a subject from different viewpoints and generating a video (volumetric video) in which the object appears as if existing in the viewing space.

For example, in Patent Literature 1, a 3D shape of a subject is determined based on a depth map representing a distance from a camera to a surface of the subject.

Furthermore, a technique of estimating a skeleton of a person appearing in an image is known. For example, in Patent Literature 2, a skeleton of a person appearing in a two-dimensional image is estimated.

### Citation List

### Patent Literature

Patent Literature 1: WO 2018/074252 A
Patent Literature 2: Japanese Patent No. 5784365

### Summary

### Technical Problem

Conventionally, however, there has been no example of estimating a 3D shape of a subject and a 3D skeleton of the subject from multi-view images obtained by imaging the subject from different directions.

The present disclosure proposes an information processing apparatus, an information processing method, and a program capable of estimating a 3D shape and a 3D skeleton of a subject from multi-view images of the subject.

### Solution to Problem

In order to solve the above problem, an information processing apparatus according to one embodiment of the present disclosure includes: a generation unit that generates a 3D model of a subject from multi-view images obtained by imaging the subject from a plurality of viewpoints; and an estimation unit that estimates a 2D skeleton of the subject from each of the multi-view images, and estimates a 3D skeleton of the subject based on an estimation result of the 2D skeleton.

### Brief Description of Drawings

FIG. 1 outlines a flow of processing of generating a 3D model of a subject.
FIG. 2 illustrates a method of estimating a skeleton of the subject.
FIG. 3 is a hardware block diagram illustrating one example of a hardware configuration of a video processing apparatus of an embodiment.
FIG. 4 is a functional block diagram illustrating one example of a functional configuration of the video processing apparatus of the embodiment.
FIG. 5 illustrates processing of estimating a 3D skeleton of the subject.
FIG. 6 illustrates one example of a method of designating a portion to be deformed of a 3D model.
FIG. 7 illustrates one example of a method of designating a method of deforming the 3D skeleton.
FIG. 8 illustrates a method of designating an amount of deformation of a portion to be deformed of the 3D skeleton.
FIG. 9 illustrates a method of a polygon selection unit selecting a polygon necessary for deformation of a pose.
FIG. 10 illustrates a method of a 3D model deformation unit deforming the pose.
FIG. 11 illustrates a specific example of processing performed by the video processing apparatus of the embodiment.
FIG. 12 is a flowchart illustrating one example of a flow of the processing performed by the video processing apparatus of the embodiment.

### Description of Embodiments

An embodiment of the present disclosure will be described in detail below with reference to the drawings. Note that, in the following embodiment, the same reference signs are attached to the same parts to omit duplicate description.

Note that, the present disclosure will be described in accordance with the following item order.
1. Embodiment of Present Disclosure
   1-1. Description of Premise - Generation of 3D Model
   1-2. Description of Premise - Generation of Volumetric Video
   1-3. Description of Premise - Skeleton Estimation
   1-4. Hardware Configuration of Video Processing Apparatus
   1-5. Functional Configuration of Video Processing Apparatus
   1-6. Estimation of 3D Skeleton
   1-7. Method of Designating Portion to Be Deformed
   1-8. Method of Designating Deformation Method
   1-9. Method of Designating Deformation Amount
   1-10. Deformation of 3D Model
   1-11. Flow of Processing Performed by Video Processing Apparatus
   1-12. Effects of Embodiment
2. Application Example of Present Disclosure
   2-1. Production of Content
   2-2. Experience in Virtual Space
   2-3. Communication with Remote Location
   2-4. Others

### (1. Embodiment of Present Disclosure)

### [1-1. Description of Premise - Generation of 3D Model]

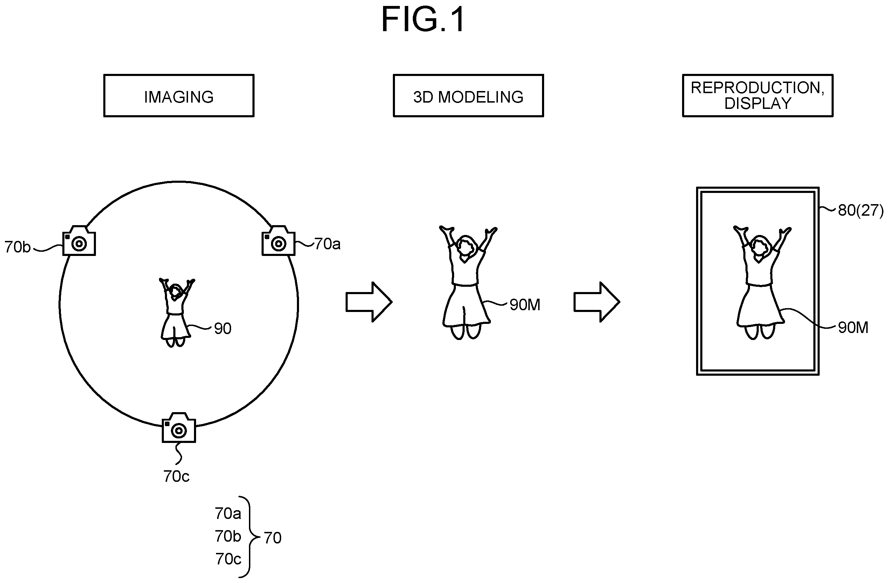

First, a flow of processing of a video processing apparatus 10 generating a 3D model 90M of a subject 90 will be described with reference to FIG. 1. The present disclosure is applied to the video processing apparatus 10. FIG. 1 outlines the flow of processing of generating a 3D model of a subject.

As illustrated in FIG. 1, the 3D model 90M of the subject 90 is obtained by performing processing of imaging the subject 90 with a plurality of cameras 70 (70a, 70b, and 70c) and generating the 3D model 90M having 3D information on the subject 90 by 3D modeling.

As illustrated in FIG. 1, the plurality of cameras 70 is arranged facing the subject 90 outside the subject 90 so as to surround the subject 90 in the real world. FIG. 1 illustrates an example in which three cameras 70a, 70b, and 70c are arranged around the subject 90. Note that not three but a larger number of cameras 70 may be provided. Furthermore, camera parameters 71a, 71b, and 71c of the cameras 70a, 70b, and 70c are preliminarily acquired by performing calibration. The camera parameters 71a, 71b, and 71c include internal parameters and external parameters of the cameras 70a, 70b, and 70c. Note that the plurality of cameras 70 may acquire depth information indicating a distance to the subject 90.

3D modeling of the subject 90 is performed by using multi-view images I synchronously captured by the three cameras 70a, 70b, and 70c from different viewpoints. Note that the multi-view images I include a two-dimensional image Ia captured by the camera 70a, a two-dimensional image Ib captured by the camera 70b, and a two-dimensional image Ic captured by the camera 70c. The 3D model 90M of the subject 90 is generated by the 3D modeling in units of frames of the images captured by the three cameras 70a, 70b, and 70c.

The 3D model 90M is generated by, for example, the method described in Patent Literature 1. Specifically, the 3D model 90M of the subject 90 is generated by cutting out a three-dimensional shape of the subject 90 based on images from a plurality of viewpoints (e.g., silhouette image from plurality of viewpoints) by using a visual hull.

The 3D model 90M expresses shape information representing the surface shape of the subject 90 in, for example, polygon mesh data M expressed by connections of a vertex with a vertex. The polygon mesh data M includes, for example, three-dimensional coordinates of a vertex of a mesh and index information indicating which vertices are combined to form a triangle mesh. Note that a method of expressing the 3D model is not limited thereto, and the 3D model may be described by an expression method using a so-called point cloud. The point cloud is expressed by position information on a point. Furthermore, color information data representing color of the subject 90 is generated as texture data T in association with these pieces of 3D shape data. The texture data includes view independent texture and view dependent texture. In the view independent texture, color is constant even if viewed from any direction. In the view dependent texture, color changes depending on a viewing direction.

Since the generated 3D model 90M is often used by a calculator different from a calculator that has generated the 3D model 90M, the 3D model 90M is compressed (encoded) into a format suitable for transmission and accumulation. Then, the compressed 3D model 90M is transmitted to the calculator that is to use the 3D model 90M.

### [1-2. Description of Premise - Generation of Volumetric Video]

The calculator that has received the transmitted 3D model 90M decompresses (decodes) the compressed 3D model 90M. Then, a video (volumetric video) obtained by observing the subject 90 from any viewpoint is generated by using the polygon mesh data M and the texture data T of the decompressed 3D model 90M.

Specifically, texture mapping is performed. In the texture mapping, the polygon mesh data M of the 3D model 90M is projected to any camera viewpoint, and the texture data T representing a color and a pattern is pasted to the projected polygon mesh data M.

The generated image is displayed on a display device 80 placed in a viewing environment of a user. The display device 80 includes, for example, a head mounted display, a spatial display, a mobile phone, a television, and a PC.

Note that, in order to simplify the description, the video processing apparatus 10 of the embodiment will be described on the assumption that the same calculator generates the 3D model 90M and generates a volumetric video obtained by deforming the generated 3D model 90M.

### [1-3. Description of Premise - Skeleton Estimation]

Next, a method of estimating a 2D skeleton 82 of a person being the subject 90 from an image of the person will be described. The 2D skeleton 82 represents the posture of the subject 90.

The 2D skeleton 82 is generated by, for example, the method described in Patent Literature 2. Specifically, a database of silhouette images of the person and segments representing a body and limbs generated from the silhouette images is preliminarily made. Then, for example, the shape of the skeleton, the positions of joints, and the positions of hand tips, foot tips, and the face are estimated by collating the captured image with the database.

Furthermore, an example in which similar processing is performed by using a neural network is known. The neural network is generated by machine learning using deep learning.

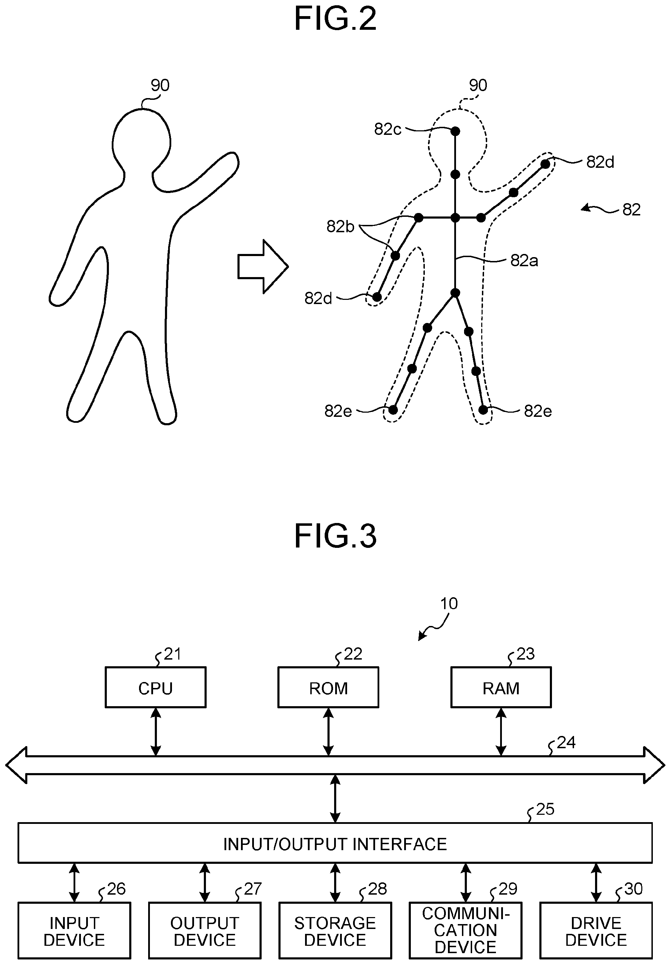

As illustrated in FIG. 2, the position and the shape of the 2D skeleton 82 is estimated from the image of the subject 90 by performing such skeleton estimation. The 2D skeleton 82 includes a bone 82a, a joint 82b, a head 82c, a hand tip 82d, and a foot tip 82e.

The bone 82a is a link that connects structures (joint 82b, head 82c, hand tip 82d, and foot tip 82e) connected to each other.

The joint 82b is a connection point of two different bones 82a.

The head 82c indicates a position corresponding to the head of the subject 90.

The hand tip 82d and the foot tip 82e indicate positions corresponding to the hand tip and the foot tip of the subject 90.

### [1-4. Hardware Configuration of Video Processing Apparatus]

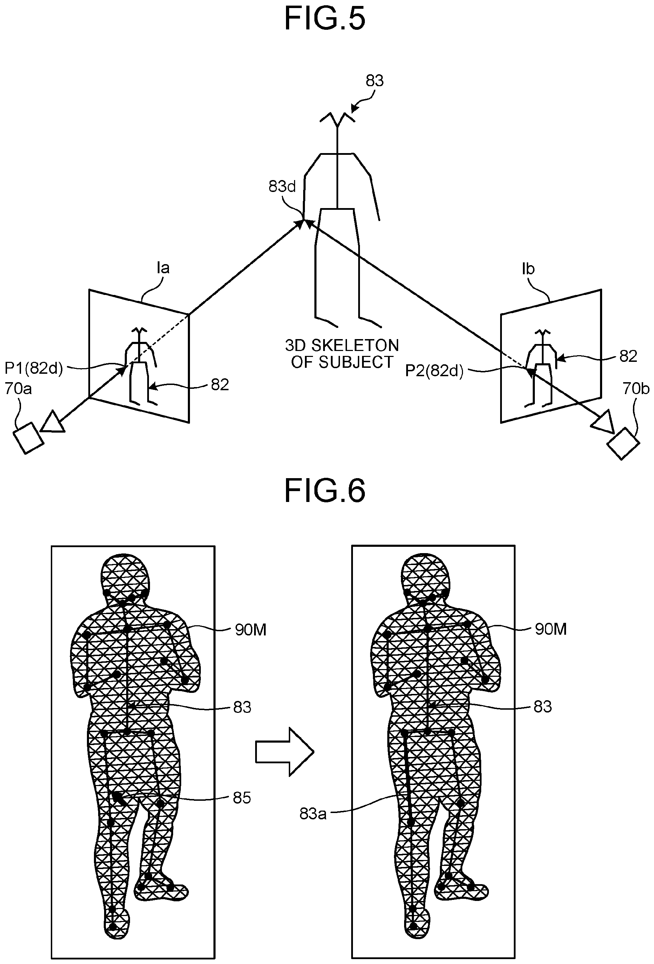

The video processing apparatus 10 of the embodiment generates the 3D model 90M and the 2D skeleton 82 of the subject 90. Furthermore, the video processing apparatus 10 estimates a 3D skeleton 83 (see FIG. 5) of the subject 90. Moreover, the video processing apparatus 10 deforms the posture of the 3D model 90M based on instructions from an operator. Note that the video processing apparatus 10 is one example of an information processing apparatus in the present disclosure.

First, a hardware configuration of the video processing apparatus 10 will be described with reference to FIG. 3. FIG. 3 is a hardware block diagram illustrating one example of the hardware configuration of the video processing apparatus of the embodiment.

In a computer in FIG. 3, a CPU 21, a ROM 22, and a RAM 23 are mutually connected via a bus 24. An input/output interface 25 is also connected to the bus 24. An input device 26, an output device 27, a storage device 28, a communication device 29, and a drive device 30 are connected to the input/output interface 25.

The input device 26 includes, for example, a keyboard, a mouse, a microphone, a touch panel, and an input terminal. The output device 27 includes, for example, a display, a speaker, and an output terminal. The above-described display device 80 is one example of the output device 27. The storage device 28 includes, for example, a hard disk, a RAM disk, and a nonvolatile memory. The communication device 29 includes, for example, a network interface. The drive device 30 drives a removable medium such as a magnetic disk, an optical disk, a magnetooptical disk, and a semiconductor memory.

The computer configured as described above performs the above-described series of pieces of processing by the CPU 21 loading a program stored in the storage device 28 in the RAM 23 via the input/output interface 25 and the bus 24 and executing the program, for example. The RAM 23 also appropriately stores data and the like necessary for the CPU 21 to execute various pieces of processing.

The program executed by the computer can be applied by, for example, being recorded in a removable medium serving as a package medium and the like. In that case, the program can be installed in the storage device 28 via the input/output interface by mounting the removable medium to the drive device 30.

Furthermore, the program can be provided via a wired or wireless transmission medium such as a local area network, the Internet, and digital satellite broadcasting. In that case, the program can be received by the communication device 29, and installed in the storage device 28.

### [1-5. Functional Configuration of Video Processing Apparatus]

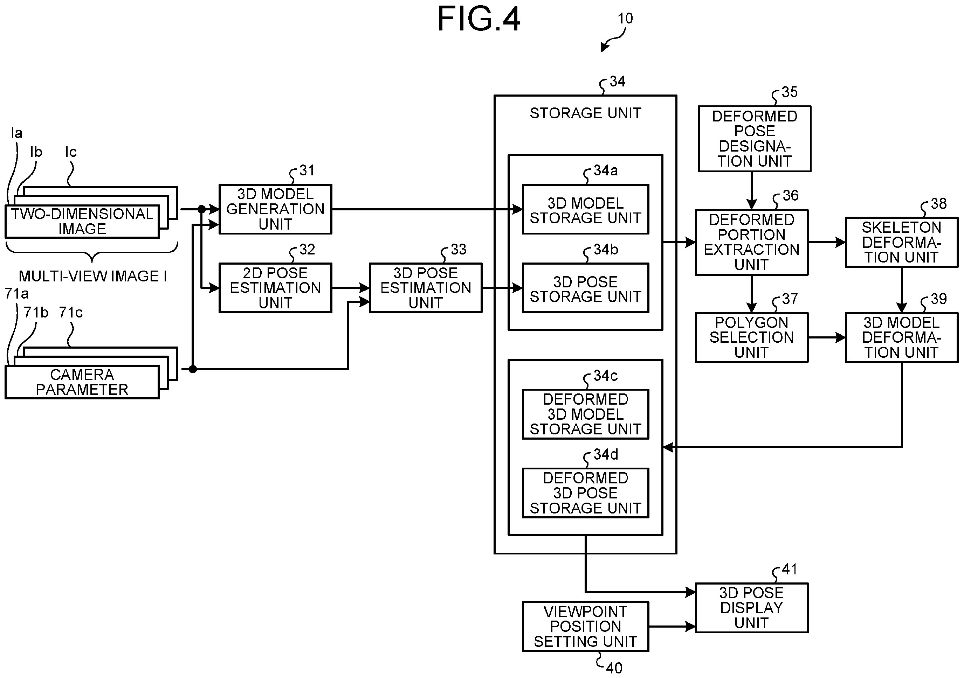

A functional configuration of the video processing apparatus 10 will be described with reference to FIG. 4. FIG. 4 is a functional block diagram illustrating one example of the functional configuration of the video processing apparatus of the embodiment.

The two-dimensional images Ia, Ib, and Ic are images of the subject 90 captured by the cameras 70a, 70b, and 70c, respectively. The two-dimensional images Ia, Ib, and Ic have been obtained by imaging the subject 90 from different positions. The two-dimensional images Ia, Ib, and Ic are collectively referred to as multi-view images I.

The camera parameters 71a, 71b, and 71c include internal parameters and external parameters of the cameras 70a, 70b, and 70c. The internal parameters include the optical centers and focal lengths of the cameras 70a, 70b, and 70c. The external parameters are used to identify installation positions of the cameras 70a, 70b, and 70c. The camera parameters 71a, 71b, and 71c are obtained by analyzing (calibrating) images obtained at the time when a target, whose shape, size, and installation position are known, is imaged by the cameras 70a, 70b, and 70c.

A 3D model generation unit 31 generates the 3D model 90M of the subject 90 from the multi-view images I obtained by imaging the subject 90 from a plurality of viewpoints. Note that the 3D model generation unit 31 is one example of a generation unit in the present disclosure. The 3D model 90M is described by, for example, the polygon mesh data M and the texture data T as described above.

A 2D pose estimation unit 32 estimates the 2D skeleton 82 of the subject 90 in each of the two-dimensional images Ia, Ib, and Ic. The method of estimating the 2D skeleton 82 is as described above.

A 3D pose estimation unit 33 estimates the 3D skeleton 83 of the subject 90 based on a plurality of 2D skeletons 82 estimated from each of the two-dimensional images Ia, Ib, and Ic. Note that the 3D pose estimation unit 33 is one example of an estimation unit in the present disclosure. A specific method of estimating the 3D skeleton 83 performed by the 3D pose estimation unit 33 will be described later (see FIG. 5).

A storage unit 34 includes a 3D model storage unit 34a, a 3D pose storage unit 34b, a deformed 3D model storage unit 34c, and a deformed 3D pose storage unit 34d.

The 3D model storage unit 34a stores the 3D model 90M of the subject 90 generated by the 3D model generation unit 31.

The 3D pose storage unit 34b stores the 3D skeleton 83 of the subject 90 estimated by the 3D pose estimation unit 33.

The deformed 3D model storage unit 34c stores a 3D model 90M'of the subject 90 deformed by a 3D model deformation unit 39 to be described later.

The deformed 3D pose storage unit 34d stores a 3D skeleton 83' of the subject 90 deformed by a skeleton deformation unit 38 to be described later.

A deformed pose designation unit 35 designates a part to be deformed, a method of deformation and an amount of deformation of the part from the 3D model 90M of the subject 90 stored by the 3D model storage unit 34a. The part to be deformed is designated by, for example, clicking the part desired to be deformed of the 3D model 90M of the subject 90 with a mouse cursor. Note that the deformed pose designation unit 35 is one example of a designation unit in the present disclosure.

A deformed portion extraction unit 36 extracts the 3D skeleton 83 associated with the part of the 3D model 90M designated by the deformed pose designation unit 35 from the 3D skeleton 83 of the subject 90 stored by the 3D pose storage unit 34b.

A polygon selection unit 37 selects the polygon mesh data M associated with the 3D skeleton 83 extracted by the deformed portion extraction unit 36 from the 3D model 90M of the subject 90 stored by the 3D model storage unit 34a.

The skeleton deformation unit 38 deforms the 3D skeleton 83 of the subject 90 based on the designation from the deformed pose designation unit 35. Note that the skeleton deformation unit 38 is one example of a first deformation unit in the present disclosure.

The 3D model deformation unit 39 deforms the 3D model 90M in accordance with the deformation of the 3D skeleton 83 caused by the skeleton deformation unit 38. Note that the 3D model deformation unit 39 is one example of a second deformation unit in the present disclosure.

A viewpoint position setting unit 40 designates a viewpoint position from which the 3D model 90M' deformed by the 3D model deformation unit 39 is observed.

A 3D pose display unit 41 displays an image obtained by observing the 3D model 90M' of the subject 90 deformed by the skeleton deformation unit 38 and the 3D model deformation unit 39 from the viewpoint position set by the viewpoint position setting unit 40. Note that the 3D pose display unit 41 is one example of a display unit in the present disclosure.

### [1-6. Estimation of 3D Skeleton]

A method of estimating the 3D skeleton 83 of the subject 90 will be described with reference to FIG. 5. FIG. 5 illustrates processing of estimating a 3D skeleton of a subject.

The 3D pose estimation unit 33 estimates the 3D skeleton 83 of the subject 90 based on the 2D skeleton 82 estimated by the 2D pose estimation unit 32 from images of the subject 90 in each of the two-dimensional images Ia, Ib, and Ic.

Specifically, as illustrated in FIG. 5, the 3D skeleton 83 of the subject 90 is estimated from the position of the 2D skeleton 82 of the subject 90 in optional two images of the two-dimensional images Ia, Ib, and Ic, for example, the two-dimensional images Ia and Ib. The installation position and the orientation of an optical axis of each camera are known by preliminarily performed calibration. If the coordinates of the same part in the images are known, the three-dimensional coordinates of the part can be estimated by using the principle of triangulation.

The 3D pose estimation unit 33 extends a line segment connecting a point P1 with the optical center of the camera 70a. The point P1 indicates the hand tip 82d of the 2D skeleton 82 estimated from the two-dimensional image Ia. Furthermore, the 3D pose estimation unit 33 extends a line segment connecting a point P2 with the optical center of the camera 70b. The point P2 indicates the hand tip 82d of the 2D skeleton 82 estimated from the two-dimensional image Ib. The two extended lines intersect with each other at a point P3 in space. The point P3 represents a hand tip 83d of the 3D skeleton 83 of the subject 90.

The 3D pose estimation unit 33 performs similar processing on all corresponding joints and all end points indicating the head 82c, the hand tip 82d, and the foot tip 82e in the 2D skeleton 82 estimated from the two-dimensional image Ia and the 2D skeleton 82 estimated from the two-dimensional image Ib. This enables estimation of the 3D skeleton 83 of the subject 90.

Note that, since a blind spot of the subject 90 occurs depending on the layout of the plurality of cameras 70 (70a, 70b, and 70c), the 3D pose estimation unit 33 performs the above-described processing on as many pairs of a plurality of cameras as possible. This causes the 3D skeleton 83 of the subject 90 to be completely estimated. For example, in the case of the embodiment, the above-described processing is desirably performed on each of a pair of the camera 70a and the camera 70b, a pair of the camera 70a and the camera 70c, and a pair of the camera 70b and the camera 70c.

Respective parts constituting the estimated 3D skeleton 83 will be hereinafter referred to as a bone 83a, a joint 83b, a head 83c, the hand tip 83d, and a foot tip 83e in contrast to the bone 82a, the joint 82b, the head 82c, the hand tip 82d, and the foot tip 82e, which constitute the 2D skeleton 82.

### [1-7. Method of Designating Portion to Be Deformed]

A method of designating a portion to be deformed of the 3D model 90M of the subject 90 will be described with reference to FIG. 6. FIG. 6 illustrates one example of a method of designating a portion to be deformed of the 3D model.

An operator of the video processing apparatus 10 designates a part desired to be deformed by superimposing a mouse cursor 85 on the 3D model 90M of the subject 90 displayed on a display screen of the display device 80. The mouse cursor 85 is displayed by an operation of a mouse, which is one example of the input device 26. For example, in the example of FIG. 6, the polygon mesh data M of the thigh of the left leg of the subject 90 is designated.

The deformed pose designation unit 35 identifies a component of the 3D skeleton 83 at a position closest to the coordinates of the polygon mesh data M designated by the mouse cursor 85. In the example of FIG. 6, the bone 83a of the thigh of the left leg of the subject 90 is identified.

Note that the deformed pose designation unit 35 may directly designate the bone 83a of the thigh of the left leg of the 3D skeleton 83 displayed together with the 3D model 90M of the subject 90 with the mouse cursor 85.

Furthermore, although not illustrated in FIG. 6, an operation button for giving instructions for cancellation is displayed on the display screen of the display device 80 in order to correct a mistake in designation. Furthermore, in order to advance the processing, a confirmation button indicating that designation has been confirmed is displayed.

Note that FIG. 6 illustrates an example in which the 3D model 90M and the 3D skeleton 83 are observed from behind the subject 90. Therefore, the position of the hand tips of the subject 90 should be hidden and invisible. The video processing apparatus 10, however, estimates the 3D skeleton 83 based on the multi-view images I captured from a plurality of directions surrounding the subject 90. Thus, the 3D skeleton 83 is estimated without a blind spot as illustrated in FIG. 6.

### [1-8. Method of Designating Deformation Method]

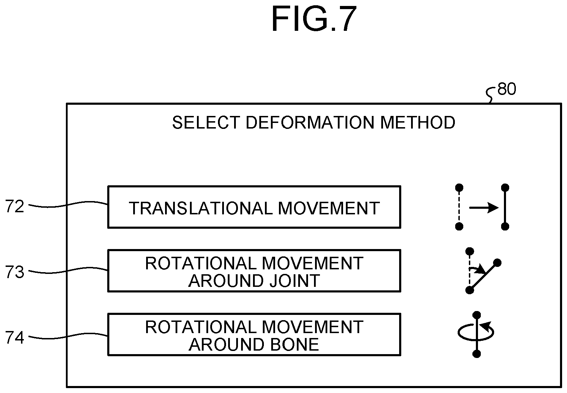

A method of designating a method of deforming the 3D skeleton 83 of the subject 90 will be described with reference to FIG. 7. FIG. 7 illustrates one example of the method of designating a method of deforming the 3D skeleton.

The deformed pose designation unit 35 displays deformation method selection information in FIG. 7 on the display screen of the display device 80. The deformation method selection information includes a plurality of deformation methods. In the example of FIG. 7, a translational movement selection button 72, a rotational movement around joint selection button 73, and a rotational movement around bone selection button 74 are displayed.

The translational movement selection button 72 gives instructions for translational movement of the selected bone 83a.

The rotational movement around joint selection button 73 gives instructions for rotational movement of rotating the selected bone 83a around the joint 83b.

The rotational movement around bone selection button 74 gives instructions for rotational movement of rotating the selected bone 83a around the axis of the bone 83a.

The operator of the video processing apparatus 10 designates a deformation method desired by the operator himself/herself by selecting one of the buttons in FIG. 7.

### [1-9. Method of Designating Deformation Amount]

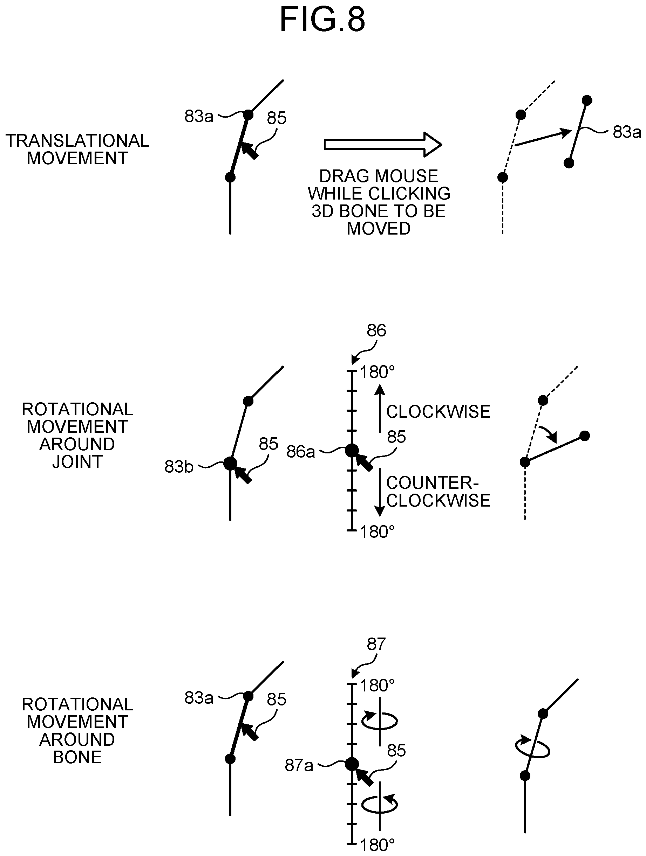

A method of designating an amount of deformation of the 3D skeleton 83 of the subject 90 will be described with reference to FIG. 8. FIG. 8 illustrates the method of designating an amount of deformation of a portion to be deformed of the 3D skeleton.

The deformed pose designation unit 35 causes the operator of the video processing apparatus 10 to designate a deformation amount corresponding to the designated deformation method on the display screen of the display device 80. A method of designating a deformation amount for each of the translational movement, the rotational movement around a joint, and the rotational movement around a bone will be described below.

When the translational movement is designated, the operator of the video processing apparatus 10 places the mouse cursor 85 on the bone 83a desired to be deformed as illustrated in the upper stage of FIG. 8. Then, the bone 83a is translated to a place up to which the bone 83a is desired to be deformed by dragging the mouse while clicking the mouse. An amount of the translational movement is determined by releasing the click of the mouse after the movement to the target position is completed.

When the rotational movement around a joint is designated, the deformed pose designation unit 35 designates the corresponding joint 83b. The operator of the video processing apparatus 10 selects the joint 83b by placing the mouse cursor 85 on the corresponding joint 83b and clicking the mouse.

Next, the deformed pose designation unit 35 displays a slider 86 on the display screen of the display device 80. The slider 86 is a human machine interface (HMI) tool for designating a rotation angle around a joint.

The slider 86 has a structure in which a handle 86a focused by the mouse cursor 85 slides on a bar having an angular scale and extending in a vertical direction. A part above the center of the bar represents a clockwise rotation angle, and a part below the center of the bar represents a counterclockwise rotation angle. Then, the rotation angle around the joint 83b is designated by the position of the slid handle 86a.

When the rotational movement around a bone is designated, the operator of the video processing apparatus 10 places the mouse cursor 85 on the bone 83a desired to be deformed. The deformed pose designation unit 35 displays a slider 87 on the display screen of the display device 80. The slider 87 is an HMI tool for designating a rotation angle around an axis of the bone.

The slider 87 has a structure in which a handle 87a focused by the mouse cursor 85 slides on a bar having an angular scale and extending in a vertical direction. A part above the center of the bar and a part below the center of the bar represent opposite rotation angles. Then, the rotation angle around the axis of the bone 83a is designated by the position of the slid handle 87a.

Note that, when the rotation angle around an axis of a bone is designated, a viewpoint position adjustment function for freely changing an observation direction of the 3D skeleton 83 displayed on the display screen of the display device 80 is desirably provided since designation of a rotation direction is difficult. Then, an observation viewpoint of the 3D skeleton 83 is preferably adjusted such that the bone 83a desired to be deformed is displayed extending in substantially the same direction as the slider 87.

Note that the operator of the video processing apparatus 10 designates a deformation method in a manner similar to that described above for another bone 83a connected to the bone 83a to be deformed or another bone 83a connected to the joint 83b to be deformed.

The method of designating a deformation amount is not limited to the method in FIG. 8. That is, any designation method may be used as long as the method has a similar function.

### [1-10. Deformation of 3D Model]

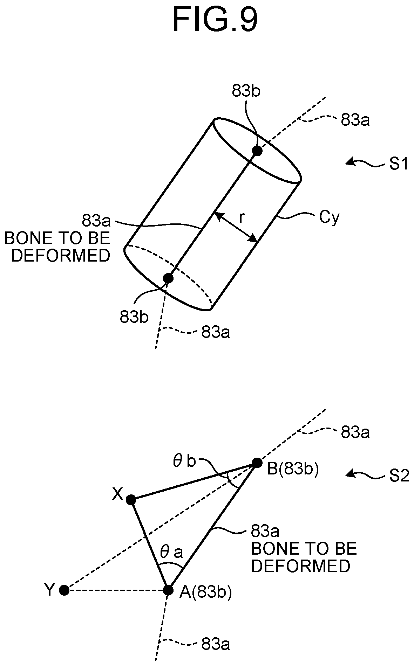

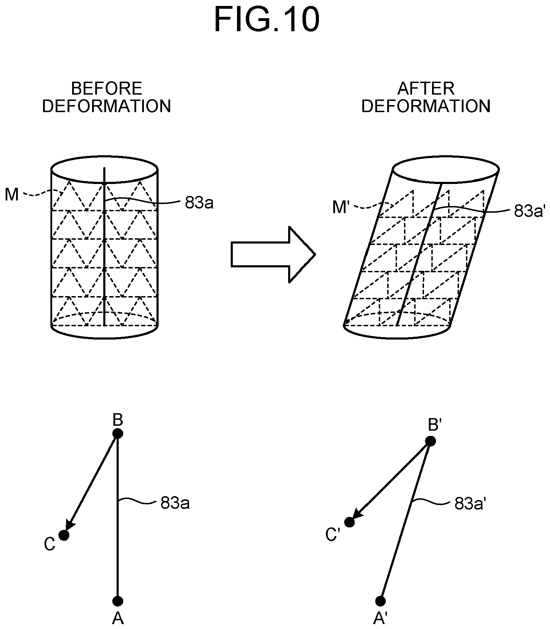

A method of the video processing apparatus 10 deforming the 3D model 90M of the subject 90 will be described with reference to FIGS. 9 and 10. FIG. 9 illustrates a method of the polygon selection unit selecting a polygon necessary for deformation of a pose. FIG. 10 illustrates a method of the 3D model deformation unit deforming a pose.

As illustrated in an upper view S1 of FIG. 9, the polygon selection unit 37 deforms all pieces of the polygon mesh data M in the range where the distance from the bone 83a to be deformed is equal to or less than a threshold r, that is, inside a cylinder Cy in FIG. 9.

Alternatively, when both end points of the bone 83a to be deformed are defined as a point A and a point B and a vertex of a polygon constituting the polygon mesh data M is defined as a vertex X as illustrated in a lower view S2 of FIG. 9, the polygon selection unit 37 may set the vertex X as a deformation target in a case where both ∠XAB(θa) and ∠XBA(θb) are acute angles. In this case, in the lower view S2 of FIG. 9, a vertex Y is not a deformation target since LYAB is an obtuse angle.

Note that, when determining whether vertex X is a deformation target, the polygon selection unit 37 first determines whether the distance between the bone 83a and the vertex X is equal to or less than the threshold r. Then, when the distance between the bone 83a and the vertex X is equal to or less than the threshold r, whether both LXAB and ZXBA are acute angles is determined.

Furthermore, in the lower view S2 of FIG. 9, when both the inner product of a vector AX and a vector AB and the inner product of a vector BX and a vector BA are positive, the polygon selection unit 37 may select the vertex X as a deformation target.

The skeleton deformation unit 38 deforms the 3D skeleton 83 of the subject 90 in accordance with a designation made by the above-described designation method. For example, as illustrated in FIG. 10, the bone 83a is deformed into a bone 83a'. Then, with the deformation of the 3D skeleton 83, the 3D model deformation unit 39 deforms the polygon mesh data M selected by the polygon selection unit 37 into polygon mesh data M' in FIG. 10.

It is assumed that a point C constituting a vertex of the polygon mesh data M is deformed into a point C' by deformation of the polygon mesh data M. Then, a method of determining the position of the deformed point C' will be described. Note that both end points of the deformed bone 83a are defined as the point A and the point B, and both end points of the deformed bone 83a' are defined as a point A' and a point B'.

The point A, the point B, the point C, the point A', the point B', and the point C' are arranged in the positional relation in FIG. 10.

In the case, if the subject 90, which is a deformation target, is assumed to be a rigid body, a vector BC and a vector B'C' have an equal length. Furthermore, the coordinates of the deformed point B' and point C' are known. Therefore, the coordinates of the deformed point A' can be calculated by adding the direction component of a vector B'A' and the direction component of the vector BC to the coordinates of the point B'.

The 3D model deformation unit 39 calculates the position of a deformed triangle mesh by applying the above-described method to all the three vertices of the triangle mesh forming the polygon mesh data M.

Note that the 3D model deformation unit 39 maps color information mapped on the triangle mesh before deformation as it is to the deformed triangle mesh.

### [1-11. Flow of Processing Performed by Video Processing Apparatus]

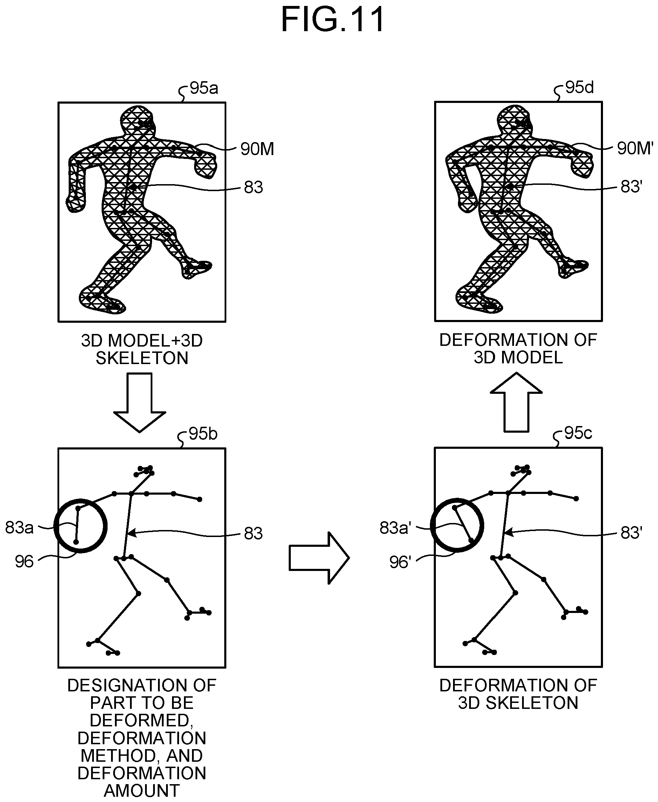

A specific example of processing performed by the video processing apparatus 10 will be described with reference to FIG. 11. FIG. 11 illustrates the specific example of the processing performed by the video processing apparatus of the embodiment.

An image 95a illustrates one example of the 3D model 90M and the 3D skeleton 83 of the subject 90 before deformation.

An image 95b illustrates one example of a state in which the deformed pose designation unit 35 designates a part to be deformed, a method of deformation, and an amount of deformation of the 3D skeleton 83. In the example of an image 95b, the bone 83a with a circle 96 is selected as a part to be deformed.

An image 95c illustrates one example of the 3D skeleton 83' deformed by the skeleton deformation unit 38. Comparison between the image 95b and the image 95c clarifies that the bone 83a at the position with the circle 96 has been deformed into the bone 83a'.

An image 95d illustrates one example of the 3D model 90M' deformed by the 3D model deformation unit 39. The 3D model 90M is deformed into the 3D model 90M' in accordance with the deformed 3D skeleton 83'.

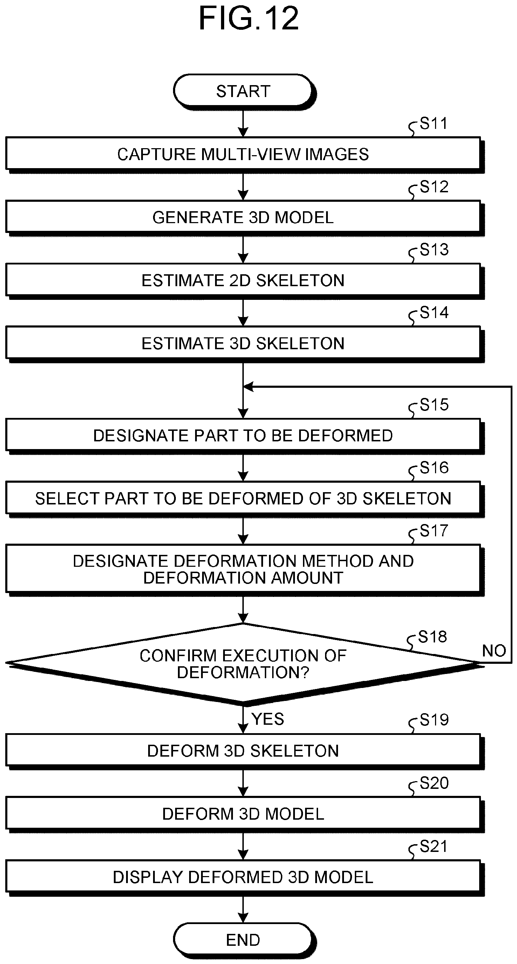

Next, one example of a flow of the processing performed by the video processing apparatus 10 will be described with reference to FIG. 12. FIG. 12 is a flowchart illustrating one example of the flow of the processing performed by the video processing apparatus of the embodiment.

The video processing apparatus 10 captures the multi-view images I of the subject 90 (Step S11).

The 3D model generation unit 31 generates the 3D model 90M of the subject 90 by using the multi-view images I (Step S12).

The 2D pose estimation unit 32 estimates the 2D skeleton 82 of the subject 90 from the multi-view images I (Step S13).

The 3D pose estimation unit 33 estimates the 3D skeleton 83 of the subject 90 by using the 2D skeleton 82 of the subject 90 estimated by the 2D pose estimation unit 32 and the camera parameters 71a, 71b, and 71c used when the multi-view images I are captured (Step S14).

The deformed pose designation unit 35 designates a part to be deformed of the subject 90 (Step S15).

The deformed portion extraction unit 36 selects a part to be deformed of the 3D skeleton 83 corresponding to the part to be deformed designated by the deformed pose designation unit 35 (Step S16).

The deformed pose designation unit 35 further designates a method of deformation and an amount of deformation of the part to be deformed (Step S17).

The video processing apparatus 10 confirms execution of deformation with an operator (Step S18). When it is determined that the deformation is to be executed (Step S18: Yes), the processing proceeds to Step S19. In contrast, when it is not determined that deformation is to be executed (Step S18: No), the processing returns to Step S15.

When it is determined in Step S18 that the deformation is to be executed, the skeleton deformation unit 38 generates the 3D skeleton 83' obtained by deforming the 3D skeleton 83 of the subject 90 (Step S19).

The polygon selection unit 37 selects the polygon mesh data M to be deformed together with the deformed 3D skeleton 83. Then, the 3D model deformation unit 39 generates the 3D model 90M' by deforming the polygon mesh data M selected by the polygon selection unit 37 (Step S20) .

The 3D pose display unit 41 generates a volumetric image obtained by observing the 3D model 90M' of the deformed subject 90 from a virtual viewpoint set ty the viewpoint position setting unit 40, and displays the volumetric image on the display device 80 (Step S21). Thereafter, the video processing apparatus 10 ends the processing in FIG. 12. Note that the 3D skeleton 83' deformed in Step S19 is stored in the deformed 3D pose storage unit 34d. Furthermore, the 3D model 90M' deformed in Step S20 is stored in the deformed 3D model storage unit 34c.

Note that, although not described in the flowchart, in Step S19, a part connected to a part of the deformed 3D skeleton 83 is also deformed so as to maintain the continuity of the skeleton.

### [1-12. Effects of Embodiment]

As described above, the video processing apparatus 10 (information processing apparatus) of the embodiment includes the 3D model generation unit 31 (generation unit) and the 3D pose estimation unit 33 (estimation unit). The 3D model generation unit 31 generates the 3D model 90M of the subject 90 from the multi-view images I obtained by imaging the subject 90 from a plurality of viewpoints. The 3D pose estimation unit 33 estimates the 2D skeleton 82 of the subject 90 from each of the multi-view images I, and estimates the 3D skeleton 83 of the subject 90 based on the estimation result of the 2D skeleton 82.

This enables the 3D shape and 3D skeleton of the subject 90 to be estimated from the multi-view images I of the subject 90.

Furthermore, in the video processing apparatus 10 of the embodiment, the 3D pose estimation unit 33 (estimation unit) estimates the 3D skeleton 83 of the subject 90 by performing triangulation based on two 2D skeletons 82 estimated from different viewpoints among the 2D skeletons 82 of the subject 90 estimated from the multi-view images I and the positions of the different viewpoints.

This enables complete, reliable, and easy estimation of the 3D skeleton 83 of the subject 90.

Furthermore, the video processing apparatus 10 of the embodiment includes the deformed pose designation unit 35 (designation unit), the skeleton deformation unit 38 (first deformation unit), and the 3D model deformation unit 39 (second deformation unit). The deformed pose designation unit 35 designates a part to be deformed and a method of deformation and an amount of deformation of the part from the 3D skeleton 83 estimated by the 3D pose estimation unit 33. The skeleton deformation unit 38 deforms the 3D skeleton 83 based on the designation from the deformed pose designation unit 35. The 3D model deformation unit 39 deforms the 3D model 90M described in a polygon mesh in accordance with the deformation performed by the skeleton deformation unit 38.

This enables a part desired to be deformed, a deformation method, and a deformation amount to be easily designated.

Furthermore, in the video processing apparatus 10 of the embodiment, the 3D model deformation unit 39 (second deformation unit) deforms a polygon forming a polygon mesh based on a deformation method and a deformation amount designated by the deformed pose designation unit 35 (designation unit). The polygon mesh has a distance equal to or less than the predetermined threshold r in a direction orthogonal to the bone 83a. The bone 83a forms the 3D skeleton 83 deformed by the skeleton deformation unit 38 (first deformation unit).

This enables a triangle mesh deformed with the 3D skeleton 83 to be easily selected.

Furthermore, in the video processing apparatus 10 of the embodiment, in relation to all the vertices X of polygons forming the polygon mesh, the 3D model deformation unit 39 (second deformation unit) deforms a polygon based on a deformation method and a deformation amount designated by the deformed pose designation unit 35 (designation unit) when both interior angles other than an interior angle facing the bone 83a from a vertex X among interior angles of a triangle are acute angles. The triangle is formed by the vertex X and both end points of the bone 83a forming the 3D skeleton 83 deformed by the skeleton deformation unit 38 (first deformation unit).

This enables a triangle mesh deformed with the 3D skeleton 83 to be easily selected.

Furthermore, in the video processing apparatus 10 of the embodiment, the 3D model deformation unit 39 (second deformation unit) gives color information that a polygon had before deformation to the polygon constituting the deformed polygon mesh.

This enables the texture data T to be easily attached to the deformed 3D model 90M'.

Furthermore, the video processing apparatus 10 of the embodiment further includes the 3D pose display unit 41 (display unit) that displays the subject 90 deformed by the skeleton deformation unit 38 (first deformation unit) and the 3D model deformation unit 39 (second deformation unit).

This enables the deformed 3D model 90M' to be easily confirmed.

Furthermore, in the video processing apparatus 10 of the embodiment, the deformed pose designation unit 35 (designation unit) receives selection of a part to be deformed from the 3D model 90M, and sets the 3D skeleton 83 in the vicinity of the selected part as a deformation target.

This enables a portion to be deformed to be easily selected.

Furthermore, in the video processing apparatus 10 of the embodiment, the deformed pose designation unit 35 (designation unit) designates at least one of translational movement of the bone 83a constituting the 3D skeleton 83, rotational movement around the joint 83b of an end of the bone 83a, and rotational movement around an axis of the bone 83a.

This enables the pose of the subject 90 to be deformed with a high degree of freedom.

### (2. Application Example of Present Disclosure)

### [2-1. Production of Content]

For example, video content may be produced by combining the 3D model 90M of the subject 90 generated by the 3D model generation unit 31 with a 3D model managed by another server. Furthermore, for example, when there is background data in an imaging device such as a Lidar, content that makes a person feel as if the subject 90 is at a place indicated by the background data can be produced by combining the 3D model 90M of the subject 90 generated by the 3D model generation unit 31 with the background data.

### [2-2. Experience in Virtual Space]

For example, the subject 90 generated by the 3D model generation unit 31 can be disposed in virtual space in which users communicate with each other as avatars. In this case, a user becomes an avatar, and can view the live-action subject 90 in the virtual space.

### [2-3. Communication with Remote Location]

For example, a user at a remote location can view the 3D model 90M of the subject 90 through a reproduction device at the remote location by transmitting the 3D model 90M of the subject 90 generated by the 3D model generation unit 31 from a transmission unit 14 to the remote location. For example, the subject 90 can communicate with the user at the remote location in real time by transmitting the 3D model 90M of the subject 90 in real time. For example, a case where the subject 90 is a teacher and the user is a student and a case where the subject 90 is a doctor and the user is a patient can be assumed.

### [2-4. Others]

For example, a free viewpoint video of a sport or the like can be generated based on the 3D models 90M of a plurality of subjects 90 generated by the 3D model generation unit 31. Furthermore, an individual can distribute himself/herself generated by the 3D model generation unit 31 to a distribution platform. As described above, the contents of the embodiment described in the present specification can be applied to various pieces of technology and service.

Although the present disclosure has been described with reference to some embodiments, these embodiments may be executed in any device. In that case, the device is required to have a necessary functional block and to be able to acquire necessary information.

Furthermore, for example, one device may execute each step of one flowchart, or a plurality of devices may execute a share of each step of one flowchart. Moreover, when one step includes a plurality of pieces of processing, one device may execute the plurality of pieces of processing, or a plurality of devices may execute a share of the plurality of pieces of processing. In other words, a plurality of pieces of processing included in one step can also be executed as processing of a plurality of steps. Conversely, the pieces of processing described as a plurality of steps can be collectively executed as one step.

Furthermore, for example, in a program executed by a computer, pieces of processing of steps describing the program may be executed in time series in the order described in the present specification, or may be executed in parallel or individually at necessary timing such as when a call is made. That is, as long as there is no contradiction, processing of each step may be executed in an order different from the above-described order. Moreover, processing of a step describing the program may be executed in parallel with processing of another program, or may be executed in combination with processing of another program.

Furthermore, for example, a plurality of techniques related to the present technology can be implemented independently alone as long as there is no contradiction. Of course, the plurality of techniques can be optionally applied and implemented. For example, a part or all of the present technology described in any embodiment can be implemented in combination with a part or all of the present technology described in another embodiment. Furthermore, a part or all of the above-described optional present technology can be implemented in combination with other techniques not described above.

Note that the effects set forth in the present specification are merely examples and not limitations. Other effects may be obtained. Furthermore, the embodiment of the present disclosure is not limited to the above-described embodiment, and various modifications can be made without departing from the gist of the present disclosure.

Furthermore, for example, the present disclosure can also have the configurations as follows.
(1) An information processing apparatus comprising:
   a generation unit that generates a 3D model of a subject from multi-view images obtained by imaging the subject from a plurality of viewpoints; and
   an estimation unit that estimates a 2D skeleton of the subject from each of the multi-view images, and estimates a 3D skeleton of the subject based on an estimation result of the 2D skeleton.
(2) The information processing apparatus according to (1),
   wherein the estimation unit estimates a 3D skeleton of the subject by performing triangulation based on two 2D skeletons estimated from different viewpoints among 2D skeletons of the subject estimated from each of the multi-view images and positions of the different viewpoints.
(3) The information processing apparatus according to (1) or (2), further comprising:
   a designation unit that designates a part to be deformed and a method of deformation and an amount of deformation of the part from a 3D skeleton estimated by the estimation unit;
   a first deformation unit that deforms the 3D skeleton based on designation from the designation unit; and
   a second deformation unit that deforms the 3D model described in a polygon mesh in accordance with deformation performed by the first deformation unit.
(4) The information processing apparatus according to (3),
   wherein the second deformation unit deforms a polygon forming the polygon mesh having a distance equal to or less than a predetermined threshold in a direction orthogonal to a bone forming a 3D skeleton deformed by the first deformation unit based on a deformation method and a deformation amount designated by the designation unit.
(5) The information processing apparatus according to (3) or (4),
   wherein, in relation to all vertices of a polygon forming the polygon mesh,
   the second deformation unit deforms the polygon based on a deformation method and a deformation amount designated by the designation unit when both interior angles other than an interior angle facing the bone from a vertex among interior angles of a triangle formed by the vertex and both end points of the bone forming a 3D skeleton deformed by the first deformation unit are acute angles.
(6) The information processing apparatus according to any one of (3) to (5),
   wherein the second deformation unit gives color information that a polygon had before deformation to the polygon constituting the polygon mesh that has been deformed.
(7) The information processing apparatus according to any one of (3) to (6), further comprising
   a display unit that displays the subject deformed by the first deformation unit and the second deformation unit.
(8) The information processing apparatus according to any one of (3) to (7),
   wherein the designation unit receives selection of a part to be deformed from the 3D model, and sets a 3D skeleton in a vicinity of the part that has been selected as a deformation target.
(9) The information processing apparatus according to any one of (3) to (8),
   wherein the designation unit designates at least one of translational movement of a bone constituting the 3D skeleton, rotational movement around a joint of an end of the bone, and rotational movement around an axis of the bone.
(10) An information processing method comprising:
   a generating step of generating a 3D model of a subject from multi-view images obtained by imaging the subject from a plurality of viewpoints; and
   an estimating step of estimating a 2D skeleton of the subject from each of the multi-view images, and estimating a 3D skeleton of the subject based on an estimation result of the 2D skeleton.
(11) A program causing a computer to function as:
   a generation unit that generates a 3D model of a subject from multi-view images obtained by imaging the subject from a plurality of viewpoints; and
   an estimation unit that estimates a 2D skeleton of the subject from each of the multi-view images, and estimates a 3D skeleton of the subject based on an estimation result of the 2D skeleton.

### Reference Signs List

10 VIDEO PROCESSING APPARATUS (INFORMATION PROCESSING DEVICE)
31 3D MODEL GENERATION UNIT (GENERATION UNIT)
32 2D POSE ESTIMATION UNIT
33 3D POSE ESTIMATION UNIT (ESTIMATION UNIT)
34 STORAGE UNIT
34a 3D MODEL STORAGE UNIT
34b 3D POSE STORAGE UNIT
34c DEFORMED 3D MODEL STORAGE UNIT
34d DEFORMED 3D POSE STORAGE UNIT
35 DEFORMED POSE DESIGNATION UNIT (DESIGNATION UNIT)
36 DEFORMED PORTION EXTRACTION UNIT
37 POLYGON SELECTION UNIT
38 SKELETON DEFORMATION UNIT (FIRST DEFORMATION UNIT)
39 3D MODEL DEFORMATION UNIT (SECOND DEFORMATION UNIT)
40 VIEWPOINT POSITION SETTING UNIT
41 3D POSE DISPLAY UNIT (DISPLAY UNIT)
70, 70a, 70b, 70c CAMERA
71a, 71b, 71c CAMERA PARAMETER
80 DISPLAY DEVICE
82 2D SKELETON
82a, 83a, 83a' BONE
82b, 83b JOINT
82c, 83c HEAD
82d, 83d HAND TIP
82e, 83e FOOT TIP
83, 83' 3D SKELETON
85 MOUSE CURSOR
86, 87 SLIDER
86a, 87a HANDLE
90 SUBJECT
90M, 90M' 3D MODEL
I MULTI-VIEW IMAGE
Ia, Ib, Ic TWO-DIMENSIONAL IMAGE
M, M' POLYGON MESH DATA
r THRESHOLD
T TEXTURE DATA
X, Y VERTEX

## Claims

1. An information processing apparatus comprising:
a generation unit that generates a 3D model of a subject from multi-view images obtained by imaging the subject from a plurality of viewpoints; and
an estimation unit that estimates a 2D skeleton of the subject from each of the multi-view images, and estimates a 3D skeleton of the subject based on an estimation result of the 2D skeleton.

2. The information processing apparatus according to claim 1,
wherein the estimation unit estimates a 3D skeleton of the subject by performing triangulation based on two 2D skeletons estimated from different viewpoints among 2D skeletons of the subject estimated from each of the multi-view images and positions of the different viewpoints.

3. The information processing apparatus according to claim 2, further comprising:
a designation unit that designates a part to be deformed and a method of deformation and an amount of deformation of the part from a 3D skeleton estimated by the estimation unit;
a first deformation unit that deforms the 3D skeleton based on designation from the designation unit; and
a second deformation unit that deforms the 3D model described in a polygon mesh in accordance with deformation performed by the first deformation unit.

4. The information processing apparatus according to claim 3,
wherein the second deformation unit deforms a polygon forming the polygon mesh having a distance equal to or less than a predetermined threshold in a direction orthogonal to a bone forming a 3D skeleton deformed by the first deformation unit based on a deformation method and a deformation amount designated by the designation unit.

5. The information processing apparatus according to claim 3,
wherein, in relation to all vertices of a polygon forming the polygon mesh,
the second deformation unit deforms the polygon based on a deformation method and a deformation amount designated by the designation unit when both interior angles other than an interior angle facing the bone from a vertex among interior angles of a triangle formed by the vertex and both end points of the bone forming a 3D skeleton deformed by the first deformation unit are acute angles.

6. The information processing apparatus according to claim 3,
wherein the second deformation unit gives color information that a polygon had before deformation to the polygon constituting the polygon mesh that has been deformed.

7. The information processing apparatus according to claim 3, further comprising
a display unit that displays the subject deformed by the first deformation unit and the second deformation unit.

8. The information processing apparatus according to claim 3,
wherein the designation unit receives selection of a part to be deformed from the 3D model, and sets a 3D skeleton in a vicinity of the part that has been selected as a deformation target.

9. The information processing apparatus according to claim 3,
wherein the designation unit designates at least one of translational movement of a bone constituting the 3D skeleton, rotational movement around a joint of an end of the bone, and rotational movement around an axis of the bone.

10. An information processing method comprising:
a generating step of generating a 3D model of a subject from multi-view images obtained by imaging the subject from a plurality of viewpoints; and
an estimating step of estimating a 2D skeleton of the subject from each of the multi-view images, and estimating a 3D skeleton of the subject based on an estimation result of the 2D skeleton.

11. A program causing a computer to function as:
a generation unit that generates a 3D model of a subject from multi-view images obtained by imaging the subject from a plurality of viewpoints; and
an estimation unit that estimates a 2D skeleton of the subject from each of the multi-view images, and estimates a 3D skeleton of the subject based on an estimation result of the 2D skeleton.
